Europäisches Patentamt

European Patent Office

Office européen des brevets

(19)

(11) **EP 0 537 469 B1**

(12) **EUROPÄISCHE PATENTSCHRIFT**

(45) Veröffentlichungstag und Bekanntmachung des Hinweises auf die Patenterteilung:
**18.06.1997  Patentblatt 1997/25**

(51) Int Cl.⁶: **G02B 9/18**

(21) Anmeldenummer: **92115254.2**

(22) Anmeldetag: **07.09.1992**

(54) **Fotografisches Objektiv vom Triplettyp**

Photographic objective of the triplet type

Objectif photographique du type triplet

(84) Benannte Vertragsstaaten:
**AT CH DE FR GB LI**

(30) Priorität: **12.10.1991  DE 4133844**

(43) Veröffentlichungstag der Anmeldung:
**21.04.1993   Patentblatt 1993/16**

(73) Patentinhaber: **Leica Camera GmbH**
**D-35606 Solms (DE)**

(72) Erfinder:
• **Kölsch, Lothar**
**W-Wilnsdorf 3 (DE)**
• **Schaefer, K.D.**
**W-6333 Braunfels (DE)**

(56) Entgegenhaltungen:
• **PATENT ABSTRACTS OF JAPAN vol. 10, no. 135 (P-457) 20. Mai 1986 & JP-A-60 258 510**
• **PATENT ABSTRACTS OF JAPAN vol. 8, no. 248 (P-313) 14. November 1984 & JP-A-59 121 014**
• **PATENT ABSTRACTS OF JAPAN vol. 8, no. 1 (P-246) 6. Januar 1984 & JP-A-58 166 314**
• **PATENT ABSTRACTS OF JAPAN vol. 16, no. 155 (P-1338) 16. April 1992 & JP-A-40 07 511**
• **Gottfried Schröder, "Technische Optik", 2. Auflage, Vogel-Verlag (1977), Seiten 49 u. 50**
• **"Handbuch der wissenschaftlichen und angewandten Photographie, Band I: Das Photographische Objektiv", Verlag von Julius Springer (1932), Seiten 223 bis 242**
• **Johannes Flügge, "Leitfaden der geometrischen Optik und des Optikrechnens", van den Hoeck & Rupprecht (1954), Seiten 149-151**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein fotografisches Objektiv der relativen Öffnung 3,5 und der Brennweite 35mm vom Triplettyp mit Hinterblende, das insbesondere für fotografische Kompaktkameras vorgesehen ist.

Aus der DE 24 24 343 C2 ist ein Fotoobjektiv vom Triplettyp mit Hinterblende bekannt, das drei Linsenglieder enthält, von denen das vordere eine objektseitig konvexe, positive Meniskuslinse, das mittlere Linsenglied eine bikonkave Linse und das hintere Linsenglied ein bikonvexes Kittglied aus zwei Linsen entgegengesetzter Brechkraft ist.

Aus der DE-PS 544 329 ist ein fotografisches Objektiv aus einer Zertreuungslinse und je einem vor und hinter ihr angeordneten sammelnden Linsenglied besteht, von denen das objektseitige als Kittglied mit positiver Gesamtbrechkraft ausgebildet ist. Dieses bekannte Objektiv weist eine Brennweite 100mm auf; Angaben über die Lage der Blende liegen nicht vor.

Aus JP-A-59-121014 ist ein Weitwinkelobjektiv vom Tessar Triplettyp mit Hinterblende bekannt, das aus einem objektseitigen Kittglied positiver Gesamtbrechkraft, einem bikonkaven mittleren Linsenglied und einem bikonvexen Hinterglied besteht. Das Objektiv hat eine relative Öffnung von 3,5 und eine Brennweite von 100mm.

Der Erfindung liegt die Aufgabe zugrunde, ein äußerst kompaktes fotografisches Objektiv der eingangs erwähnten Gattung mit ausgewogener monochromatischer Korrektion sowie einer Reduzierung der chromatischen Vergrößerungsdifferenz, der Farbkoma und des Farbastigmatismus anzugeben, das insgesamt bessere Abbildungseigenschaften als bekannte Systeme dieser Art aufweist.

Diese Aufgabe wird erfindungsgemäß durch einen Aufbau des Objektivs gemäß dem kennzeichnenden Teil des Anspruchs 1 erreicht.

Eine vorteilhafte Ausführungsform eines erfindungsgemäßen Objektivs ist in Anspruch 2 angegeben.

Bei den erfindungsgemäßen Objektiven wird die Kompaktheit durch die in Anspruch 1 aufgeführte Bedingung (I) beschrieben. Für die Korrektion der monochromatischen Bildfehler hat sich eine hohe Brechzahl in der ersten Linsengruppe entsprechend Bedingung (II) von Anspruch 1 als günstig erwiesen. Damit der angestrebte Ausgleich zwischen den Linsenflächen 2 und 7 unter Vermeidung von Bildfehlern höherer Ordnung erzielt wird, ist eine große Differenz $v_1$ - $v_2$ gemäß Bedingung (III) in Anspruch 1 wesentlich. Durch die Bedingung (IV) wird schließlich die Wirkung der Kittfläche in der ersten Linsengruppe beschrieben, wobei durch diese Kittfläche die letzte Fläche 7 auf den Fehler $F_2$ (chromatische Vergrößerungsdifferenz) kompensiert wird. Zusätzlich wird so eine Entspannung des zweiten Linsengliedes erzeugt, so daß hier ein größerer -Wert und eine niedrigere Brechzazhl ausreichen, was sich positiv auf die Petzvalsumme auswirkt. Außerdem wird eine Reduzierung der Flächenteilkoeffizienten 3. Ordnung erreicht, welche die monochromatischen und chromatischen Bildfehler höherer Ordnung günstig beeinflußt.

Die Erfindung ist anhand der Zeichnung näher erläutert.
Es zeigen:

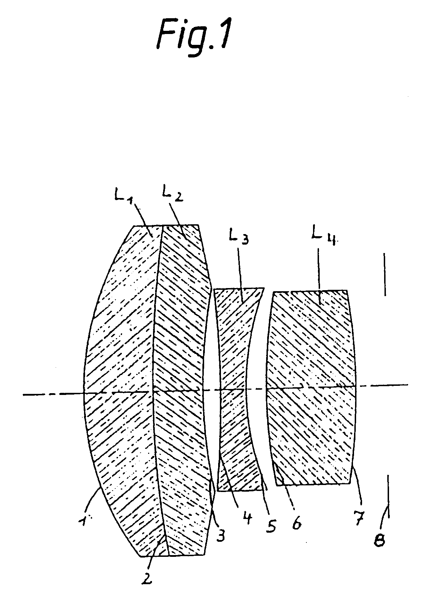

Fig. 1          ein Schnittbild eines erfindungsgemäßen Objektivs,

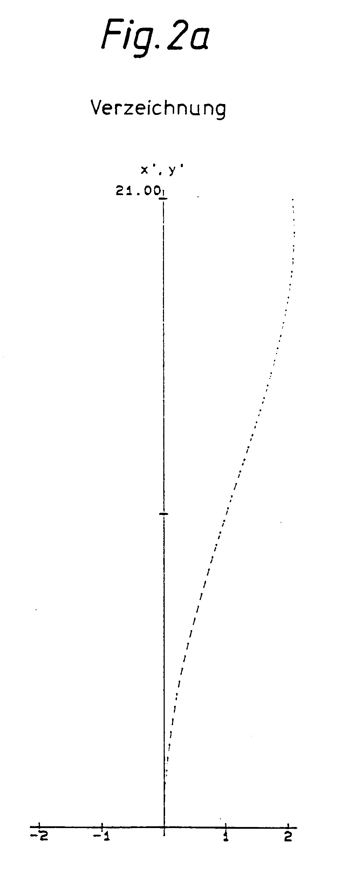

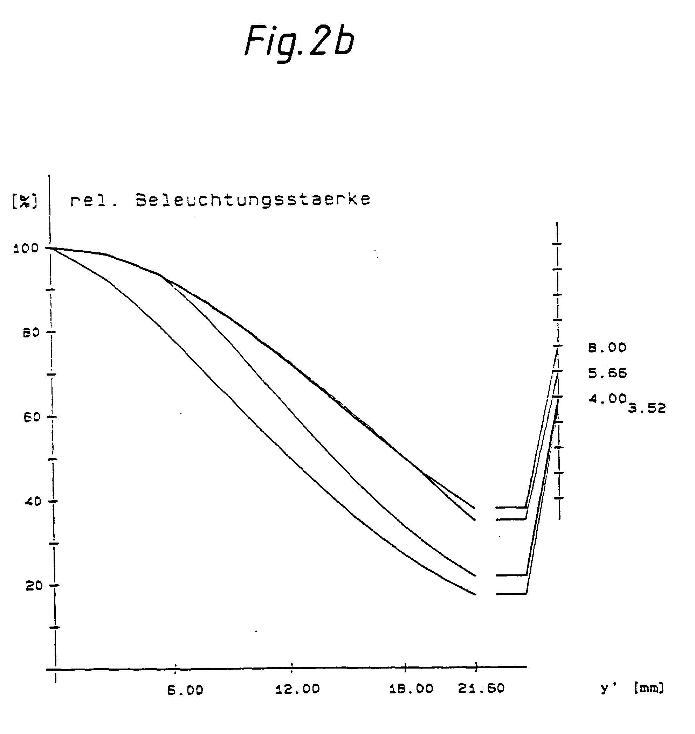

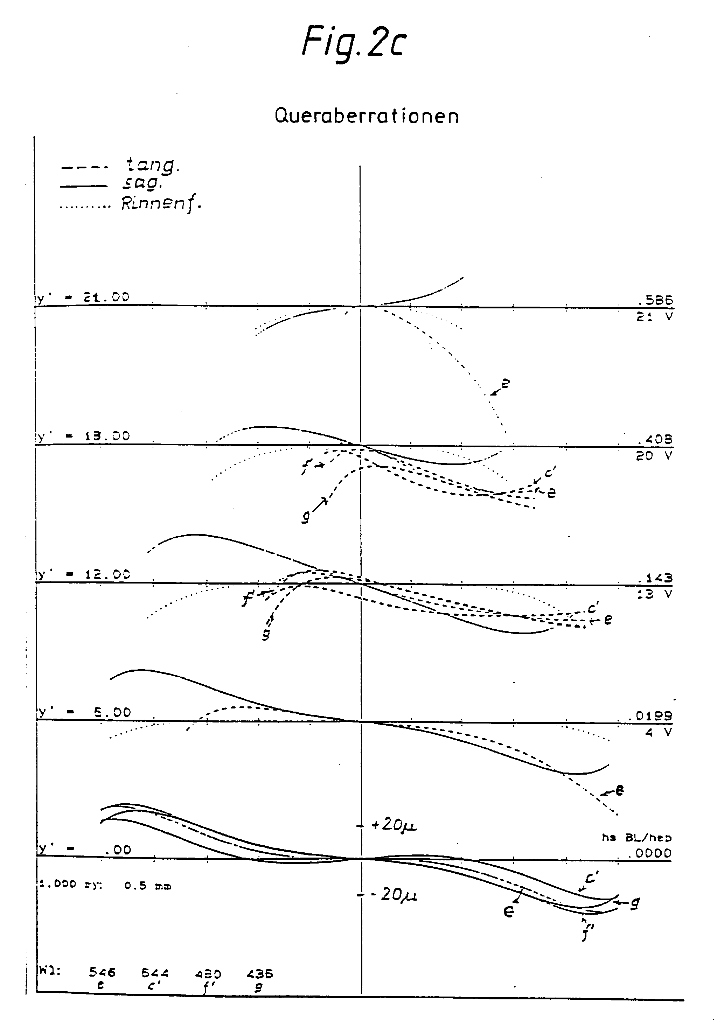

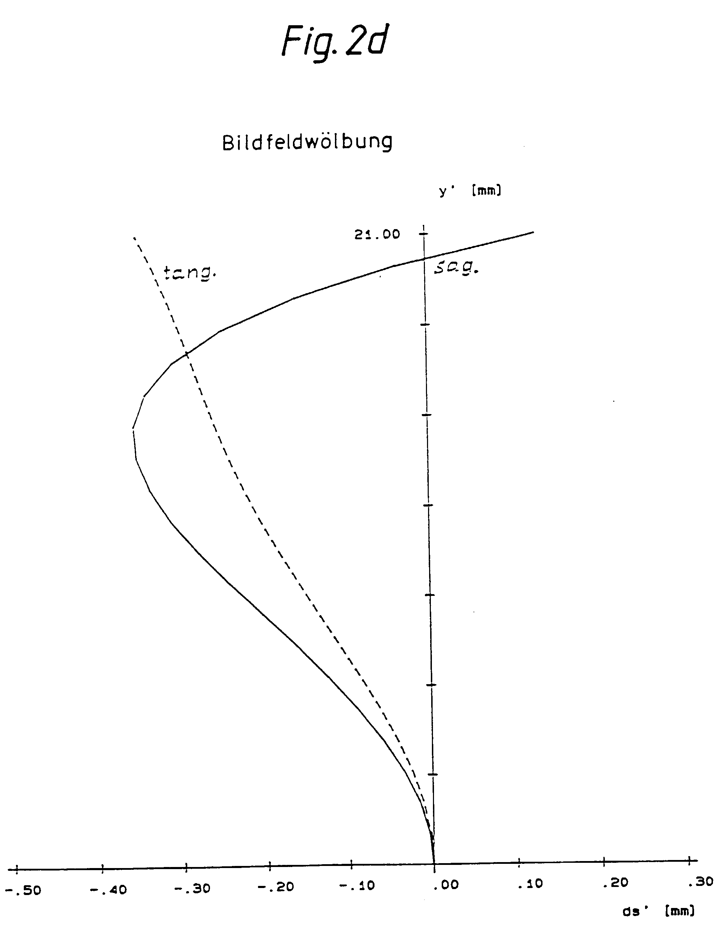

Fig. 2A-D     den Korrektionszustand des erfindungsgemäßen Objektivs mit den in Anspruch 2 aufgeführten Daten.

Außer den in Anspruch 2 aufgeführten numerischen Daten weist das erfindungsgemäße Objektiv folgende Paraxialdaten auf:

f' = 33,6323
S' = 26,7165
ßap'= 0,7290
SS' = 10,8000
Z' = 1,2000

worin

S'       die Schnittweite,
f'        die Brennweite,
ßap'    die Pupillenvergrößerung der Austrittspupille,
SS'     die Baulänge zwischen dem ersten und dem letzten Linsenscheitel und
Z'       der Abstand der Hinterblende vom letzten Linsenscheitel bedeuten.

Aus den Korrekturkurven ergibt sich, daß das erfindungsgemäße Objektiv bei äußerst kompaktem Aufbau trotz Verwendung einer Hinterblende eine günstige monochromatische Korrektion, insbesondere eine weitgehende Reduktion der chromatischen Vergrößerungsdifferenz, der Farbkoma und des Farbastigmatismus aufweist.

Es versteht sich, daß die numerischen Daten im Rahmen der üblichen Variationen abweichen können.

**Patentansprüche**

1. Fotografisches Objektiv der relativen Öffnung 3,5 und der Brennweite 35 mm vom Triplettyp mit Hinterblende, bestehend aus einem objektseitigen Kittglied ($L_1$, $L_2$) positiver Gesamtbrechkraft, welches aus einer ersten positiven und einer zweiten negativen Linse besteht, einem bikonkaven mittleren Linsenglied ($L_3$) und einem bikonvexen Hinterglied ($L_4$), wobei folgende Bedingungen erfüllt sind:

   (I) $\dfrac{B_L}{S'} < 0,6$, wobei $S' = 0,8 \times f'$
   (II) $n_2 > 1,7$
   (III) $\nu_1 - \nu_2 > 15$ und wobei

   $B_L$      die Baulänge des Objektivs,
   $S'$      dessen Schnittweite,
   $f'$      die Brennweite des Objektivs,
   $n_2$      den Brechungsindex des zweiten Linsenglieds $L_2$,
   $\nu_{1,2}$      die Abbe-Zahlen des ersten und zweiten Linsenglieds $L_1$, $L_2$

   bedeuten, **dadurch gekennzeichnet**, daß die Brechzahlen n der Linsenglieder $L_1$, $L_2$ nahezu identisch sind und daß das Linsensystem die Bedingung:
   (IV)      $0,7 \times F_2(7) < F_2(2) < 1,3 \times F_2(7)$

   erfüllt mit

   $F_2(2,7)$      die Seidelwerte für die chromatische Vergrößerungsdifferenz der Linsenglieder mit den Linsenflächen 2 und 7.

2. Fotografisches Objektiv nach Anspruch 1, **gekennzeichnet durch** folgende numerische Daten:

   |   | r | d | $n_e$ | $\nu_e$ |
   |---|---|---|---|---|
   | 1 | 11,0297 | 2,7300 | 1,808109 | 46,34 |
   | 2 | 39,1519 | 2,0219 | 1,812640 | 25,23 |
   | 3 | 19,1519 | 0,7000 |  |  |
   | 4 | - 40,8013 | 1,0051 | 1,652230 | 33,57 |
   | 5 | 10,4692 | 0,8000 |  |  |
   | 6 | 20,7116 | 3,5430 | 1,716700 | 42,89 |
   | 7 | - 24,0136 | 1,2000 |  |  |
   | 8 | Blende | 24,5165 |  |  |

   worin

   r(1-7)      die Krümmungsradien der einzelnen Linsenflächen 1-7,

   d(1-8)      die Abstände und Dicken derselben,

   n(1,2,4,6)      die Brechungsindizes ne der Linsenglieder mit den Linsenflächen 1,2,4,6 und

   $\nu$(1,2,4,6)      die entsprechenden Abbe-Zahlen $\nu_e$ bedeuten.

**Claims**

1. Photographic objective of the relative aperature 3.5 and focal width 35 mm of the triplet type with rear shutter, consisting of a cemented element ($L_1$, $L_2$) at the object side and of positive total refractive power, which consists of a first positive and a second negative lens, a biconcave middle lens element ($L_3$) and a biconvex rear element ($L_4$), wherein the following conditions are fulfilled:

(I) $\dfrac{B_L}{S'} < 0.6$, wherein S' = 0.8 x f'

(II) n2 > 1.7

(III) $\nu_1 - \nu_2 > 15$ and wherein

$B_L$     signifies the overall length of the objective,

S'     signifies the intercept length thereof,

f'     signifies the focal width of the objective,

$n_2$     signifies the refractive index of the second lens element $L_2$,

1,2     signify the abbe indices of the first and second lens elements $L_1$, $L_2$,

characterised thereby that the refractive indices n of the lens elements $L_1$, $L_2$ are almost identical and that the lens system fulfills the condition:

(IV) $0.7 \times F_2(7) < F_2(2) < 1.3 \times F_2(7)$, with

$F_2(2,7)$     the Seidel value for the chromatic magnification difference of the lens elements with the lens surfaces 2 and 7.

2.    Photographic objective according to claim 1, characterised by the following numerical data:

|  | r | d | $n_e$ | $\nu_e$ |
|---|---|---|---|---|
| 1 | 11.0297 | 2.7300 | 1.808109 | 46.34 |
| 2 | 39.1519 | 2.0219 | 1.812640 | 25.23 |
| 3 | 19.1519 | 0.7000 |  |  |
| 4 | - 40.8013 | 1.0051 | 1.652230 | 33.57 |
| 5 | 10.4692 | 0.8000 |  |  |
| 6 | 20.7116 | 3.5430 | 1.716700 | 42.89 |
| 7 | - 24.0136 | 1.2000 |  |  |
| 8 | shutter | 24.5165 |  |  |

wherein

r(1-7)     signify the radii of curvature of the individual lens surfaces 1 to 7,
d(1-8)     signify the spacings and thickness thereof,
n(1,2,4,6)     signify the refractive indices $n_e$ of the lens elements with the lens surfaces 1, 2, 4, 6 and
$\nu$(1,2,4,6)     signify the corresponding abbe indices $\nu_e$.

**Revendications**

1.    Objectif photographique ayant pour ouverture relative 3,5 et pour longueur focale 35 mm, du type triplet avec diaphragme arrière, se composant d'un organe relié par du mastic ($L_I$, $L_2$) côté objectif, de puissance positive, qui se compose d'une première lentille positive et d'une seconde négative, d'un organe de lentille biconcave au milieu ($L_3$) et d'un organe arrière biconvexe ($L_4$), ce qui permet de remplir les conditions suivantes :

(I) $\dfrac{B_L}{S'} < 0,6$ donc S'=0,8xf'
(II) $\bar{n}_2 > 1,7$

(III) ) $\nu_1-\nu_2>15$ et où

| | |
|---|---|
| $B_L$ | indique la longueur de l'objectif |
| S' | indique sa distance focale |
| f' | indique la longueur focale de l'objectif |
| $n_2$ | indique l'indice de réfraction du second organe ae lentille $L_2$, |
| $\nu_{1,2}$ | le nombre de Abbé des premier et second organes de lentille $L_1$, $L_2$ |

caractérisé en ce que, les indices de réfraction n des organes de lentille $L_1,L_2$ sont presque identiques et en ce que le système de lentilles répond à la condition :
(IV) $0,7 \times F_2(7) < F_2(2) < 1,3 \times F_2(7)$

avec
$F_2(2,7)$ les valeurs pour la différence d'agrandissement chromatique des organes de lentille ayant les surfaces de lentille 2 et 7.

2. Objectif photographique selon la revendication 1, caractérisé par les données numériques suivantes :

| | r | d | $n_e$ | $\nu_e$ |
|---|---|---|---|---|
| 1 | 11,0297 | 2,7300 | 1,808109 | 46,34 |
| 2 | 39,1519 | 2,0219 | 1,812640 | 25,23 |
| 3 | 19,1519 | 0,7000 | | |
| 4 | - 40,8013 | 1,0051 | 1,652230 | 33,57 |
| 5 | 10,4692 | 0,8000 | | |
| 6 | 20,7116 | 3,5430 | 1,716700 | 42,89 |
| 7 | - 24,0136 | 1,2000 | | |
| 8 | diaphragme | 24,5165 | | |

où

r(1-7)    les rayons de courbure des surfaces individuelles de lentille 1-7,

d(1-8)    les distances et épaisseurs de celles-ci,

n(1,2,4,6)    les indices de réfraction ne des organes de lentille ayant les surfaces de lentille 1,2,4,6 et

$\nu$(1,2,4,6)    les nombres correspondants de Abbé $\nu_e$.

# Fig.1

# Fig.2a

Verzeichnung

# Fig.2b

Fig.2c

Queraberrationen

# Fig. 2d

Bildfeldwölbung